# EUROPÄISCHE PATENTSCHRIFT

(11) **EP 2 864 645 B1**
(45) Veröffentlichungstag und Bekanntmachung des Hinweises auf die Patenterteilung: **06.11.2019**
(21) Anmeldenummer: 13719378.5
(22) Anmeldetag: 05.04.2013
(51) Int. Cl.: F15B 15/14

(54) **ARBEITSZYLINDER**
WORKING CYLINDER
CYLINDRE DE TRAVAIL

(43) Veröffentlichungstag der Anmeldung: 29.04.2015
(73) Patentinhaber: Festo AG & Co. KG, 73734 Esslingen (DE)
(72) Erfinder: REICHERT, Klaus, 7144 Steinenbronn (DE); SCHLETH, Andreas, 73734 Esslingen (DE)
(74) Vertreter: Patentanwälte Magenbauer & Kollegen Partnerschaft mbB
(86) Internationale Anmeldenummer: PCT/EP2013/001005
(87) Internationale Veröffentlichungsnummer: WO 2014/161559

(56) Entgegenhaltungen:
- DE-A1- 4 405 914
- JP-A- H11 230 115
- JP-U- S6 389 406
- US-A- 3 395 620

## Beschreibung

Die Erfindung betrifft einen Arbeitszylinder, mit einem Zylindergehäuse, in dessen Zylinderinnenraum ein durch Fluidbeaufschlagung linear verschiebbarer Antriebskolben aufgenommen ist, wobei das Zylindergehäuse zwischen zwei den Zylinderinnenraum verschließenden Zylinderdeckeln aufgenommen ist, wobei die Zylinderdeckel jeweils einen zentralen Abschnitt und einen den zentralen Abschnitt umschließenden äußeren Rahmenabschnitt mit wenigstens vier Befestigungsbereichen aufweisen, wobei zwischen dem Rahmenabschnitt und dem zentralen Abschnitt ein Ringraum ausgebildet ist, in dem in radialer Richtung ausgerichtete und sich jeweils zu einem zugeordneten Befestigungsbereich hin erstreckende Verstärkungsstreben angeordnet sind.

Arbeitszylinder werden als Arbeit leistendes Element beispielsweise in der Industriepneumatik oder -hydraulik eingesetzt. Arbeitszylinder können als sogenannte Normzylinder ausgeführt sein, bei denen gewisse Konturen festgelegt sind. Solche Normzylinder besitzen ein Zylindergehäuse, das zwischen zwei Zylinderdeckeln mittels Spannmitteln eingespannt ist. Die Spannmittel umfassen in der Regel mehrere Zugstangen, die sich jeweils vom einen zum anderen Zylinderdeckel außerhalb des Zylindergehäuses erstrecken und mittels Befestigungsmitteln derart an den Zylinderdeckeln fixiert werden, dass das Zylindergehäuse zwischen den beiden Zylinderdeckeln eingespannt ist.

Typische Ausführungsformen solcher Zylinderdeckel, wie sie insbesondere für Großzylinder eingesetzt werden, bestehen aus quadratischen Konturen, abgesetzten Senkungen/Aussparungen für Zugankermuttern und einer diagonalen Verrippung. Die Verrippungen sind oftmals scharfkantig beziehungsweise mit kleinen Radien ausgeführt, die infolge der dort auftretenden erhöhten Kerbspannungen für eine reduzierte Bauteilbelastbarkeit verantwortlich sind. Die umlaufenden Konturwandungen tragen zur mechanischen Bauteilstabilität nur bedingt bei beziehungsweise erzeugen belastungskritische Bereiche im Bereich der Verschraubung.

Aus der JP H11 230115A ist ein hydraulisch/pneumatischer Arbeitszylinder bekannt, mit einem Zylindergehäuse, das endseitig mit jeweils einem Zylinderdeckel versehen ist. Die Zylinderdeckel werden mit Zugankern gegeneinander verspannt und werden dabei auf das Zylindergehäuse gepresst. Die Zylinderdeckel besitzen daher jeweils vier Befestigungsbereiche für die Zuganker. Ferner ist ein zentraler Abschnitt vorgesehen und ein umlaufender Rahmenabschnitt, die gemeinsam einen Ringraum begrenzen. Im Ringraum verlaufen acht in radialer Richtung ausgerichtete Verstärkungsstreben, von denen vier an den Befestigungsbereichen enden. Die Verstärkungsstreben besitzen jeweils parallel zueinander ausgerichtete Außenwände.

Aufgabe der Erfindung ist es, einen Arbeitszylinder der eingangs erwähnten Art zu schaffen, der gegenüber herkömmlichen Arbeitszylindern eine erhöhte Festigkeit bei gleichbleibendem oder geringerem Materialeinsatz bei dessen Herstellung aufweist.

Diese Aufgabe wird durch einen Arbeitszylinder mit den Merkmalen des unabhängigen Anspruchs 1 gelöst. Weiterbildungen der Erfindung sind in den Unteransprüchen dargestellt.

Der erfindungsgemäße Arbeitszylinder zeichnet sich dadurch aus, dass Außenflächen einer jeweiligen Verstärkungsstrebe ausgehend vom zugeordneten Befestigungsbereich in Richtung des zentralen Abschnitts divergieren, wobei die Verstärkungsstreben jeweils eine Ausnehmung aufweisen, durch die eine rahmenartige Verstärkungsstruktur aus zwei Strebenschenkeln gebildet ist, und wobei die Strebenschenkel einer jeweiligen Verstärkungsstrebe ausgehend vom Befestigungsbereich zum zentralen Abschnitt hin divergieren.

Die divergierenden Außenflächen sorgen für einen optimalen Kraftfluss von den jeweiligen Befestigungsbereichen um das Zentrum des Arbeitszylinders herum zum gegenüberliegenden Befestigungsbereich. Zweckmäßigerweise bilden die Verstärkungsstreben sogenannte Kragbalken, die in diagonaler Richtung zwischen dem zentralen Abschnitt und dem äußeren Rahmenabschnitt in Richtung zum zugeordneten Befestigungsbereich verlaufen. Durch diesen Verlauf der Verstärkungsstreben beziehungsweise Kragbalken wird die Bauteilbelastung an den Befestigungsbereichen so in die Struktur eingeleitet, dass der Kraftfluss das Bauteil bei minimierten Wandstärken nicht überlastet. Die Zylinderdeckel können daher in Leichtbauweise ausgeführt sein.

Bei einer Weiterbildung der Erfindung gehen die einander zugewandten Außenflächen einander benachbarter Verstärkungsstreben im Bereich des zentralen Abschnitts über eine konkav gekrümmte Übergangsfläche ineinander über. Zweckmäßigerweise ist die Übergangsfläche tangentenstetig gekrümmt. Durch die konkav gekrümmte Übergangsfläche werden enge Radien vermieden, die für hohe Kerbspannungen und damit eine geringe Bauteilstabilität verantwortlich sind.

Die Verstärkungsstreben weisen jeweils eine Ausnehmung auf. Dadurch wird eine Materialeinsparung und somit eine Gewichtseinsparung der Zylinderdeckel erzielt.

Durch die Ausnehmung wird eine rahmenartige Verstärkungsstruktur aus zwei Strebenschenkeln gebildet. Eine derartige Verstärkungsstrebe könnte auch als zweirippiger Kragbalken bezeichnet werden. Eine derartige Verstärkungsstruktur mit den divergierenden Außenflächen zeichnet sich durch einen hohen Optimierungsgrad des Kraftflusses und des Materialeinsatzes aus.

Besonders zweckmäßig ist es, wenn die Strebenschenkel einer jeweiligen Verstärkungsstrebe ausgehend vom Befestigungsbereich zum zentralen Bereich hin divergieren.

Bei einer Weiterbildung der Erfindung gehen die Außenflächen der Verstärkungsstreben jeweils über eine konkav gekrümmte Anschlussfläche in den äußeren Rahmenabschnitt über. Zweckmäßigerweise ist die Anschlussfläche tangentenstetig gekrümmt. Dadurch werden auch für den Übergang zwischen den Verstärkungsstreben und dem äußeren Rahmenabschnitt enge Radien und somit hohe Kerbspannungen, die sich negativ auf die Bauteilstabilität auswirken, vermieden.

Bei einer Weiterbildung der Erfindung ragen die Befestigungsbereiche vom Rest des äußeren Rahmenabschnitts augenartig nach radial außen ab.

In besonders bevorzugter Weise weisen die Befestigungsbereiche wenigstens ein Befestigungsloch zur Aufnahme von Befestigungsmitteln auf. Die Befestigungsmittel können beispielsweise je Befestigungsbereich eine Zugstange und eine Befestigungsmutter oder Befestigungsschraube aufweisen. Durch die zwischen den beiden Zylinderdeckeln verlaufenden Zugstangen lassen sich die beiden Zylinderdeckel an das Zylindergehäuse spannen. Zweckmäßigerweise sind die nach radial außen abstehenden Befestigungsbereiche ebenfalls kerbspannungsoptimiert ausgestaltet, insbesondere werden zwischen dem äußeren Rahmenabschnitt und den sich daran anschließenden Befestigungsbereichen enge Radien vermieden.

In besonders bevorzugter Weise ist der äußere Rahmenabschnitt zwischen zwei benachbarten Befestigungsbereichen an die Außenkontur des Zylindergehäuses angepasst. Insbesondere nehmen die Bereiche des äußeren Rahmenabschnitts zwischen zwei benachbarten Befestigungsbereichen einen bogenartigen, insbesondere kreisbogenförmigen Verlauf ein.

In besonders bevorzugter Weise definieren die Befestigungsbereiche gemeinsam eine Montagefläche für Anbauteile. Der Kraftfluss externer Kräfte, die durch die Anbauteile übertragen werden, wirkt also nicht auf den äußeren Rahmenabschnitt, sondern direkt auf die Befestigungsbereiche, die insbesondere durch die dort vorhandenen Zugstangen besonders steif ausgestaltet sind. Dadurch kann die Wandstärke des äußeren Rahmenabschnitts reduziert werden. Außerdem ist eine Bearbeitung der Konturstirnfläche des äußeren Rahmenabschnitts, wie sie beim dortigen Anbau eines Anbauteils notwendig wäre, nicht notwendig.

Bei einer Weiterbildung der Erfindung sind zwischen jeweils benachbarten Verstärkungsstreben Materialausmagerungen vorgesehen. Dadurch lässt sich eine weitere Materialeinsparung erzielen.

Bei einer Weiterbildung der Erfindung weist der Zylinderdeckel einen Bodenabschnitt auf, dessen den Zylinderraum abschließende Innenfläche ohne Ausnehmungen oder Ausmagerungen versehen ist.

Zweckmäßigerweise ragen die Verstärkungsstreben von einer Außenfläche des Bodenabschnitts nach oben ab, insbesondere sind sie einstückig an die Außenfläche des Bodenabschnitts angeformt. Bei dem Zylinderdeckel kann es sich um ein Gußteil handeln, bei dem vorzugsweise die Verstärkungsstreben beim Gießprozess gleich mit angeformt werden.

Ein bevorzugtes Ausführungsbeispiel der Erfindung ist in der Zeichnung dargestellt und wird im Folgenden näher erläutert. In der Zeichnung zeigen:
- Figur 1: eine Seitenansicht eines bevorzugten Ausführungsbeispiels des erfindungsgemäßen Arbeitszylinders,
- Figur 2: eine Stirnansicht auf den Arbeitszylinder von Figur 1,
- Figur 3: einen Längsschnitt durch den Arbeitszylinder entlang der Linie III-III aus Figur 2,
- Figur 4: eine perspektivische Darstellung eines ersten Zylinderdeckels des Arbeitszylinders von Figur 1,
- Figur 5: eine Stirnansicht des Zylinderdeckels von Figur 4 und
- Figur 6: einen Längsschnitt durch den Zylinderdeckel entlang der Linie VI-VI aus Figur 5.

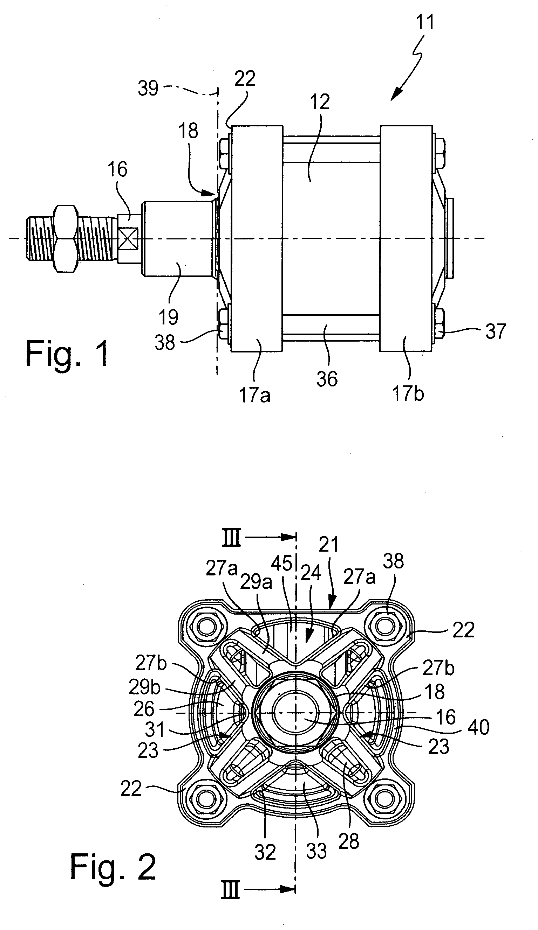

Die Figuren 1 bis 6 zeigen ein bevorzugtes Ausführungsbeispiel des erfindungsgemäßen Arbeitszylinders 11. Der Arbeitszylinder 11 wird im Folgenden beispielhaft anhand eines fluidischen, insbesondere pneumatischen Arbeitszylinders beschrieben.

Bei dem Arbeitszylinder 11 handelt es sich im Beispielsfall um einen Großzylinder mit einem Zylindergehäuse 12 relativ großen Durchmessers.

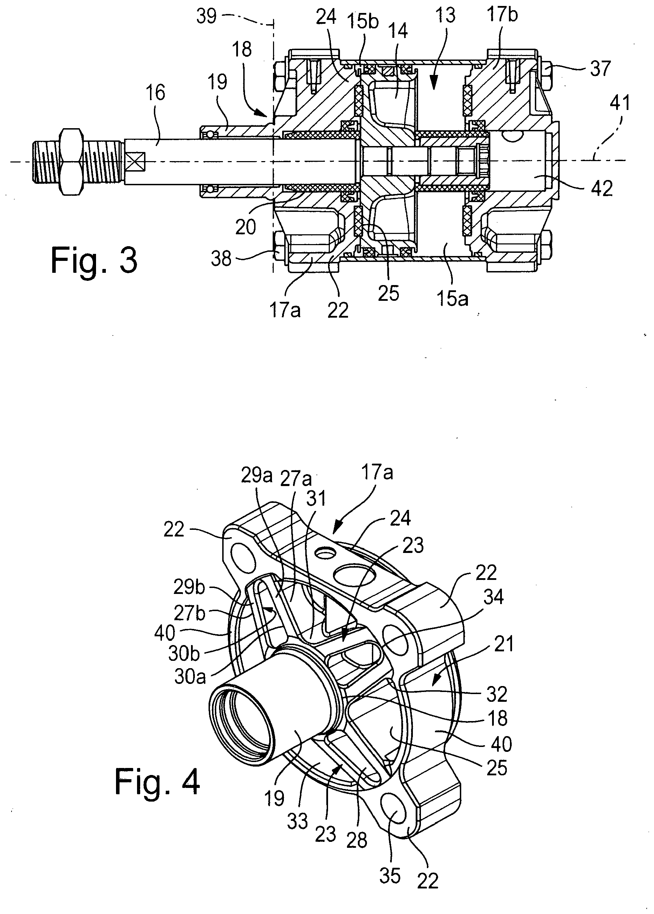

Wie insbesondere in Figur 3 dargestellt, ist im Zylinderinnenraum 13 des Zylindergehäuses 12 ein Antriebskolben 14 linear verschieblich aufgenommen. Die Verschiebung des Antriebskolbens 14 wird mittels Fluidbeaufschlagung, insbesondere mittels Beaufschlagung durch Druckluft, bewirkt. Der Antriebskolben 14 unterteilt den Zylinderraum in zwei Arbeitskammern 15a, 15b, in die wahlweise Druckluft einleitbar ist, um den Antriebskolben in die eine oder in die andere Richtung zu bewegen. Die Ansteuerung der beiden Arbeitskammern 15a, 15b erfolgt über eine Ventileinheit (nicht dargestellt), die beispielsweise ein 3/2-Wegeventil umfassen kann. Mit dieser Ventilfunktionalität ist es möglich, den einen Arbeitsraum 15b zu entlüften, während der andere Arbeitsraum 15a mit Druckluft beaufschlagt wird, und umgekehrt.

Wie insbesondere in Figur 3 dargestellt, ist der Antriebskolben 14 mit einer Kolbenstange 16 verbunden, die aus dem Zylindergehäuse 12 herausragt. An der Kolbenstange 16 lässt sich dann die Bewegung des Antriebskolbens als Abtriebsbewegung abgreifen.

Das Zylindergehäuse 12 ist zwischen zwei den Zylinderinnenraum 13 an beiden Enden verschließenden Zylinderdeckeln 17a, 17b aufgenommen. Die Zylinderdeckel 17a, 17b, von denen in den Figuren 4 bis 6 einer dargestellt ist, bestehen aus Gussmaterial, insbesondere Aluminium. Andere Herstellungsverfahren und Materialien sind denkbar. Im Folgenden wird beispielhaft der erste Zylinderdeckel 17a beschrieben, der vom prinzipiellen Aufbau mit dem zweiten Zylinderdeckel 17b identisch ist.

Der Zylinderdeckel 17a besitzt einen zentralen Abschnitt 18, der ringförmig ausgestaltet ist, und an den, wie insbesondere in Figur 4 dargestellt, ein zylindrischer Hülsenabschnitt 19 angesetzt ist. Wie insbesondere Figur 3 zeigt, ist der zentrale Abschnitt 18 mit einem Durchgangsloch 20 zur Durchführung der Kolbenstange 16 vorgesehen, die auch den koaxial zum Durchgangsloch 20 angeordneten Hülsenabschnitt 19 durchgreift. Am vorderen Austrittsende des Hülsenabschnitts 19 befindet sich eine Ringdichtung zur Abdichtung des Durchgangs zwischen der Kolbenstange 16 und dem Hülsenabschnitt 19.

Der Zylinderdeckel 17a besitzt ferner einen den zentralen Abschnitt 18 umschließenden äußeren Rahmenabschnitt 21. Am Rahmenabschnitt 21 befinden sich vier Befestigungsbereiche 22, auf die nachfolgend noch näher eingegangen wird.

Zwischen dem zentralen Abschnitt 18 und dem Rahmenabschnitt 21 ist ein Ringraum 45 ausgebildet, indem in radialer Richtung ausgerichtete und sich jeweils zu einem zugeordneten Befestigungsbereich 22 hin erstreckende Verstärkungsstreben 23 angeordnet sind. Schließlich besitzt der Zylinderdeckel 17a einen kreisscheibenartigen Bodenabschnitt 24, mit einer Innenfläche 25, die zum Zylinderinnenraum 13 hin gewandt ist, und mit einer Außenfläche 26, an die die Verstärkungsstreben 23 einstückig angeformt sind und von der Außenfläche 26 abragen.

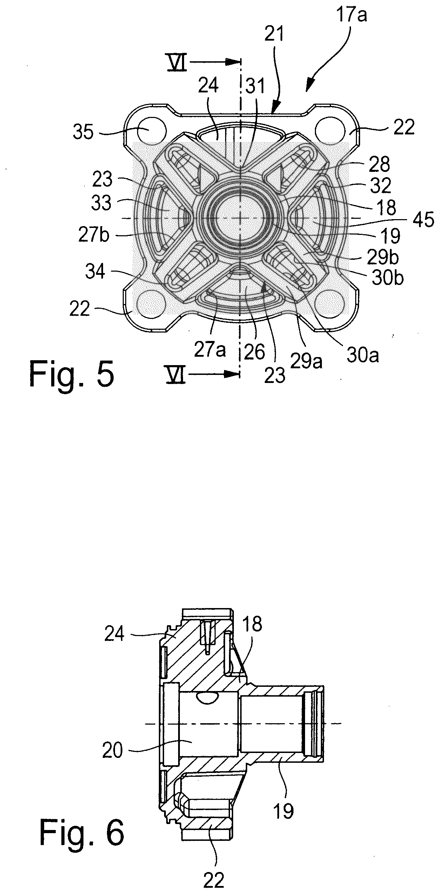

Wie insbesondere in den Figuren 2 und 5 dargestellt, definieren die im Beispielsfall vier Befestigungsbereiche 22 gemeinsam eine quadratische Grundform des Zylinderdeckels 17a. Von den Befestigungsbereichen 22 erstrecken sich die Verstärkungsstreben 23 in radialer Richtung bis zum ringförmigen zentralen Abschnitt 18.

Ein charakteristisches Merkmal der Verstärkungsstreben 23 ist, dass deren Außenflächen 27a, 27b ausgehend vom zugeordneten Befestigungsbereich 22 in Richtung zentralem Abschnitt 18 divergieren.

Die Verstärkungsstreben 23 besitzen jeweils eine sich in radialer Richtung zwischen dem Befestigungsbereich 22 und dem zentralen Abschnitt 18 erstreckende Ausnehmung 28. Zweckmäßigerweise erstreckt sich die Ausnehmung in radialer Richtung vom Befestigungsbereich 22 bis hin zur Mantelfläche des zylindrischen zentralen Abschnitts 18. Die Tiefe der Ausnehmung 28 reicht zweckmäßigerweise bis zur Außenfläche 26 des Bodenabschnitts 24. Durch die Ausnehmung 28 in der jeweiligen Verstärkungsstrebe 23 entsteht eine charakteristische rahmenartige Verstärkungsstruktur aus zwei stegartigen Strebenschenkeln 29a, 29b.

Wie insbesondere Figur 2 zeigt, divergieren die Strebenschenkel 29a, 29b einer jeweiligen Verstärkungsstrebe 23 ausgehend vom zugeordneten Befestigungsbereich 22 bis in Richtung zentralem Abschnitt 18. Die Strebenschenkel 29a, 29b besitzen also jeweils eine Außenfläche, die mit der Außenfläche der Verstärkungsstrebe 23 übereinstimmt, und eine Innenfläche 30a, 30b. Innen- und Außenfläche eines jeweiligen Strebenschenkels 29a, 29b verlaufen in radialer Richtung in etwa parallel zueinander. Die Innenflächen 30a, 30b bilden Seitenflächen der Ausnehmung 28.

Ein wichtiger Aspekt ist, dass die einander zugewandten Außenflächen 27a, 27b einander benachbarter Verstärkungsstreben 23 im Bereich des zentralen Abschnitts 28 über eine konkav gekrümmte Übergangsfläche 31 ineinander übergehen. Die Übergangsfläche 31 ist zweckmäßigerweise tangentenstetig gekrümmt. Dadurch stehen die Verstärkungsstreben 23 im Bereich des zentralen Abschnitts 18 direkt miteinander in Verbindung. Es werden kleine Radien und somit hohe Kerbspannungen an diesen Bereichen vermieden. Ferner sind die Außenflächen 27a, 27b der Verstärkungsstreben über eine konkav gekrümmte Anschlussfläche 32 mit dem äußeren Rahmenabschnitt 21 verbunden. Dies führt zu einer Verminderung der Kerbspannungen, da auch hier auf kleine Radien verzichtet wird.

Wie insbesondere in Figur 2 dargestellt, sind zwischen jeweils benachbarten Verstärkungsstreben 23 Materialausmagerungen 33 ausgebildet. Die Materialausmagerungen 33 haben die Form eines Kreissektors. Auch die einander zugewandten Innenflächen 30a, 30b einer jeweiligen Verstärkungsstrebe 23 gehen über konkav gekrümmte Übergangsflächen 34 ineinander über.

Wie bereits erwähnt, sind für die Zylinderdeckel 17a vier Befestigungsbereiche vorgesehen, es könnten jedoch auch sechs oder mehr sein. Die Befestigungsbereiche 22 ragen vom Rest des äußeren Rahmenabschnitts augenartig nach radial außen ab. Die Befestigungsbereiche 22 besitzen wenigstens ein Befestigungsloch 35 zur Aufnahme von Befestigungsmitteln. Im Beispielsfall umfassen die Befestigungsmittel je Befestigungsbereich 22 eine Zugstange 36, die einenends mit einem Schraubenkopf 37 versehen sein kann. Die Zugstange wird dann durch das Befestigungsloch 35 des zweiten Zylinderdeckels 17b hindurch gesteckt, ragt dann außerhalb des Außenumfangs des Zylindergehäuses 12 in Richtung erstem Zylinderdeckel 17a und wird dort durch das dort befindliche Befestigungsloch 35 hindurchgeführt. Am Ende der Zugstange 36 befindet sich ein Gewindeabschnitt, auf den dann eine Befestigungsmutter 38 aufgeschraubt werden kann.

Wie insbesondere in Figur 2 dargestellt, sind zumindest drei der vier sich zwischen benachbarten Befestigungsbereichen 22 erstreckende Teilabschnitte 40 des äußeren Rahmenabschnitts 21 an die Form des Zylindergehäuses 12 angepasst. Die Teilabschnitte 40 sind daher kreisbogenförmig ausgestaltet. Lediglich der in Figur 2 dargestellte obere Teilabschnitt 40 bildet einen zwischen den Befestigungsbereichen 22 linear verlaufenden Abschnitt, der als Schnittstelle zur Ankopplung der Fluidversorgung des Arbeitszylinders 11 dient. Bei durchmessergroßen Zylindern könnte die Teilabschnitte auch rund mit jeweils einer Abflachung ausgestaltet sein.

Die Befestigungsbereiche 22 bilden gemeinsam eine Montagefläche 39 für Anbauteile. Die Montagefläche 39 ist senkrecht zu einer Längsachse 41 des Arbeitszylinders 11 ausgerichtet. Zweckmäßigerweise wird die Montagefläche 39 durch die Stirnfläche der Befestigungsmuttern 38 gebildet. Diese Montagefläche 39 hat den Vorteil, dass eine Bearbeitung der Stirnkontur des äußeren Rahmenabschnitts 21 nicht notwendig ist. Ferner ist eine externe Krafteinleitung stets an den ausgesteiften Befestigungsbereichen 22 zu erwarten, sodass praktisch keine direkte Belastung des äußeren Rahmenabschnitts 21 erfolgt, wodurch der äußere Rahmenabschnitt 21 mit geringerer Wandstärke ausgebildet werden kann.

Insgesamt werden durch die zweigeteilten Verstärkungsstreben 23 mit den Ausnehmungen 28 sowie den Ausmagerungen 33 und dem charakteristischen Verlauf der Verstärkungsstreben 23 Maßnahmen durchgeführt, die einen Zylinderdeckel 17a in Leichtbauweise schaffen, der sich gegenüber herkömmlichen Zylinderdeckeln durch ein geringeres Gewicht bei optimierter Festigkeit auszeichnet.

Der zweite Zylinderdeckel 17b unterscheidet sich vom ersten Zylinderdeckel 17a lediglich dadurch, dass der Hülsenabschnitt 19 fehlt und anstelle eines zentralen Abschnitts 18 mit Durchgangsloch 20 ein zentraler Abschnitt mit Sackloch 42 ausgebildet ist.

## Patentansprüche

1. Arbeitszylinder, mit einem Zylindergehäuse (12), in dessen Zylinderinnenraum (13) ein durch Fluidbeaufschlagung linear verschiebbarer Antriebskolben (14) aufgenommen ist, wobei das Zylindergehäuse (12) zwischen zwei den Zylinderinnenraum (13) verschließenden Zylinderdeckeln (17a, 17b) aufgenommen ist, wobei die Zylinderdeckel (17a, 17b) jeweils einen zentralen Abschnitt (18) und einen den zentralen Abschnitt (18) umschließenden äußeren Rahmenabschnitt (21) mit wenigstens vier Befestigungsbereichen (22) aufweisen, wobei zwischen dem Rahmenabschnitt (21) und dem zentralen Abschnitt (18) ein Ringraum ausgebildet ist, in dem in radialer Richtung ausgerichtete und sich jeweils zu einem zugeordneten Befestigungsbereich (22) hin erstreckende Verstärkungsstreben (23) angeordnet sind, **dadurch gekennzeichnet, dass** die Außenflächen (27a, 27b) einer jeweiligen Verstärkungsstrebe (23) ausgehend vom zugeordneten Befestigungsbereich (22) in Richtung des zentralen Abschnitts (18) divergieren, wobei die Verstärkungsstreben (23) jeweils eine Ausnehmung (28) aufweisen, durch die eine rahmenartige Verstärkungsstruktur aus zwei Strebenschenkeln (29a, 29b) gebildet ist, und wobei die Strebenschenkel (29a, 29b) einer jeweiligen Verstärkungsstrebe (23) ausgehend vom Befestigungsbereich (22) zum zentralen Abschnitt (18) hin divergieren.

2. Arbeitszylinder nach Anspruch 1, **dadurch gekennzeichnet, dass** die einander zugewandten Außenflächen (27a, 27b) einander benachbarter Verstärkungsstreben (23) im Bereich des zentralen Abschnitts (18) über eine konkav gekrümmte Übergangsfläche (34) ineinander übergehen.

3. Arbeitszylinder nach einem der vorhergehenden Ansprüche, **dadurch gekennzeichnet, dass** die Außenflächen (27a, 27b) der Verstärkungsstreben (23) jeweils über eine konkav gekrümmte Anschlussfläche (32) in den äußeren Rahmenabschnitt (21) übergehen.

4. Arbeitszylinder nach einem der vorhergehenden Ansprüche, **dadurch gekennzeichnet, dass** die Befestigungsbereiche (22) vom Rest des äußeren Rahmenabschnitts (21) steg- oder augenartig nach radial außen abragen.

5. Arbeitszylinder nach einem der vorhergehenden Ansprüche, **dadurch gekennzeichnet, dass** die Befestigungsbereiche (22) wenigstens ein Befestigungsloch (20) zur Aufnahme von Befestigungsmitteln aufweisen, wobei vorzugsweise die Befestigungsmittel je Befestigungsbereich eine Zugstange (36) und eine Befestigungsmutter (38) oder Befestigungsschraube aufweisen.

6. Arbeitszylinder nach einem der vorhergehenden Ansprüche, **dadurch gekennzeichnet, dass** der äußere Rahmenabschnitt (21) zwischen zwei benachbarten Befestigungsbereichen (22) der Außenkontur des Zylindergehäuses (12) angepasst ist, insbesondere einen bogenförmigen Verlauf einnimmt.

7. Arbeitszylinder nach einem der vorhergehenden Ansprüche, **dadurch gekennzeichnet, dass** die Befestigungsbereiche (22) gemeinsam eine Montagefläche (39) für Anbauteile definieren.

8. Arbeitszylinder nach einem der vorhergehenden Ansprüche, **dadurch gekennzeichnet, dass** zwischen jeweils benachbarten Verstärkungsstreben (23) Materialausmagerungen (33) vorgesehen sind.

9. Arbeitszylinder nach einem der vorhergehenden Ansprüche, **dadurch gekennzeichnet, dass** der Zylinderdeckel (17a, 17b) einen Bodenabschnitt (24) aufweist, dessen den Zylinderinnenraum (13) abschließende Innenfläche (25) ohne Ausnehmungen oder Ausmagerungen versehen ist.

10. Arbeitszylinder nach Anspruch 9, **dadurch gekennzeichnet, dass** die Verstärkungsstreben (23) von einer Außenfläche des Bodenabschnitts abragen, insbesondere einstückig an die Außenfläche des Bodenabschnitts angeformt sind.

## Claims

1. Working cylinder with a cylinder casing (12), in the cylinder interior (13) of which is mounted a driving piston (14), capable of linear movement under fluidic pressurisation, wherein the cylinder casing (12) is mounted between two cylinder covers (17a, 17b) closing the cylinder interior (13), wherein the cylinder covers (17a, 17b) each have a central section (18) and an outer frame section (21), with at least four mounting areas (22) and encompassing the central section (18), wherein there is formed between the frame section (21) and the central section (18) an annular space, in which are provided reinforcing struts (23) aligned radially and each extending towards an assigned mounting area (22), **characterised in that** outer surfaces (27a, 27b) of each reinforcing strut (23) diverge away from the assigned mounting area (22) towards the central section (18), wherein each of the reinforcing struts (23) has a recess (28), wherein a frame-like reinforcing structure comprised of two strut legs (29a, 29b) is formed by the recess, and wherein the strut legs (29a, 29b) of each reinforcing strut (23) diverge from the mounting area (22) towards the central section (18).

2. Working cylinder according to claim 1, **characterised in that** the facing outer surfaces (27a, 27b) of adjacent reinforcing struts (23) merge into one another over a concave curved transitional surface (34) in the area of the central section (18).

3. Working cylinder according to any of the preceding claims, **characterised in that** each of the outer surfaces (27a, 27b) of the reinforcing struts (23) merges into the outer frame section (21) via a concave curved connection surface (32).

4. Working cylinder according to any of the preceding claims, **characterised in that** the mounting areas (22) extend in a web- or eye-like manner radially outwards from the rest of the outer frame section (21).

5. Working cylinder according to any of the preceding claims, **characterised in that** the mounting areas (22) have at least one fixing hole (20) for the seating of fixing means, wherein preferably the fixing means have for each mounting area a tie rod (36) and a securing nut (38) or fixing screw.

6. Working cylinder according to any of the preceding claims, **characterised in that** the outer frame section (21) between two adjacent mounting areas (22) is matched to the outer contour of the cylinder casing (12), in particular assuming a circular-arc-shaped pattern.

7. Working cylinder according to any of the preceding claims, **characterised in that** the mounting areas (22) together define a mounting surface (39) for attachments.

8. Working cylinder according to any of the preceding claims, **characterised in that** areas of weakened material (33) are provided between respectively adjacent reinforcing struts (23).

9. Working cylinder according to any of the preceding claims, **characterised in that** the cylinder cover (17a, 17b) has a base section (24) in which the inner face (25) closing the cylinder space (13) is made with no recesses or areas of weakened material.

10. Working cylinder according to claim 12, **characterised in that** the reinforcing struts (23) extend upwards from an outer surface of the base section, in particular being moulded integrally with the outer surface of the base section.

## Revendications

1. Cylindre de travail avec un boîtier de cylindre (12) dans l'espace intérieur de cylindre (13) duquel un piston d'entraînement (14) pouvant se déplacer linéairement par sollicitation fluidique est reçu, dans lequel le boîtier de cylindre (12) est reçu entre deux couvercles de cylindre (17a, 17b) fermant l'espace intérieur de cylindre (13), dans lequel les couvercles de cylindre (17a, 17b) présentent respectivement une section centrale (18) et une section de cadre (21) extérieure entourant la section centrale (18) avec au moins quatre zones de fixation (22), dans lequel un espace annulaire est réalisé entre la section de cadre (21) et la section centrale (18), dans lequel des barres de renforcement (23) orientées dans la direction radiale et s'étendant respectivement vers une zone de fixation (22) associée sont agencées, **caractérisé en ce que** les surfaces extérieures (27, 27b) d'une barre de renforcement (23) respective divergent à partir de la zone de fixation (22) associée en direction de la section centrale (18), dans lequel les barres de renforcement (23) présentent respectivement un évidement (28), par lequel est formée une structure de renforcement de type cadre de deux branches de barre (29a, 29b), et dans lequel les branches de barre (29a, 29b) d'une barre de renforcement respective (23) divergent à partir de la zone de fixation (22) vers la section centrale (18).

2. Cylindre de travail selon la revendication 1, **caractérisé en ce que** les surfaces extérieures (27a, 27b) tournées l'une vers l'autre de barres de renforcement (23) contiguës l'une à l'autre passent l'une dans l'autre dans la zone de la section centrale (18) par une surface de transition (34) courbée de manière concave.

3. Cylindre de travail selon l'une des revendications précédentes, **caractérisé en ce que** les surfaces extérieures (27a, 27b) des barres de renforcement (23) passent respectivement par une surface de raccordement (32) courbée de manière concave dans la section de cadre extérieure (21).

4. Cylindre de travail selon l'une des revendications précédentes, **caractérisé en ce que** les zones de fixation (22) dépassent du reste de la section de cadre extérieure (21) à la manière d'une barre ou d'un œil radialement vers l'extérieur.

5. Cylindre de travail selon l'une des revendications précédentes, **caractérisé en ce que** les zones de fixation (22) présentent au moins un trou de fixation (20) pour la réception de moyens de fixation, dans lequel de préférence les moyens de fixation présentent par zone de fixation une tige de traction (36) et un écrou de fixation (38) ou vis de fixation.

6. Cylindre de travail selon l'une des revendications précédentes, **caractérisé en ce que** la section de cadre extérieure (21) est adaptée entre deux zones de fixation (22) contigües au contour extérieur du boîtier de cylindre (12), en particulier occupe une étendue arquée.

7. Cylindre de travail selon l'une des revendications précédentes, **caractérisé en ce que** les zones de fixation (22) définissent ensemble une surface de montage (39) pour des pièces rapportées.

8. Cylindre de travail selon l'une des revendications précédentes, **caractérisé en ce que** des amincissements de matériau (33) sont prévus entre des barres de renforcement (23) respectivement contigües.

9. Cylindre de travail selon l'une des revendications précédentes, **caractérisé en ce que** le couvercle de cylindre (17a, 17b) présente une section de fond (24) dont la surface intérieure (25) terminant l'espace intérieur de cylindre (13) n'est pas pourvue d'évidement ni d'amincissement.

10. Cylindre de travail selon la revendication 9, **caractérisé en ce que** les barres de renforcement (23) dépassent d'une surface extérieure de la section de fond, en particulier sont formées d'un seul tenant au niveau de la surface extérieure de la section de fond.
